(19) Europäisches Patentamt
European Patent Office
Office européen des brevets

(11) **EP 2 961 080 B1**

## (12) EUROPEAN PATENT SPECIFICATION

(45) Date of publication and mention
of the grant of the patent:
**06.06.2018 Bulletin 2018/23**

(51) Int Cl.:
***H04B 7/0413*** (2017.01)

(21) Application number: **14173809.6**

(22) Date of filing: **25.06.2014**

(54) **Method for executing a Lenstra-Lenstra-Lovasz lattice reduction**

Verfahren zur Ausführung einer Lenstra-Lenstra-Lovasz-Gitterreduktion

Procédé pour exécuter une réduction en treillis Lenstra-Lenstra-Lovasz

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2015 Bulletin 2015/53**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **Gresset, Nicolas**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(56) References cited:
• **KANGLIAN ZHAO ET AL: "A low complexity fast lattice reduction algorithm for MIMO detection", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 1612-1616, XP032272797, ISSN: 2166-9570, DOI: 10.1109/PIMRC.2012.6362605 ISBN: 978-1-4673-2566-0**

**Description**

The present invention relates generally to a method and a device for executing a Lenstra-Lenstra-Lovász lattice reduction in a receiver receiving constellations points through a Multi Input Multi Output channel.

Multi antenna technique, named MIMO (Multiple Input Multiple Output) may be used for digital video broadcasting systems. For example, a two stream MIMO scheme enables to increase twice the data rate of the broadcasting system.

The increase of the number of transmit antennas allows an improvement of the system robustness at the price of a drastic increase of the receiver complexity.

Lattice reduction based receivers allows to obtain quasi-optimal performance with a low complexity as soon as the pre-processing of the lattice reduction is not taken into account.

Classically, a Subspace Latice Reduction Aided Receiver provides near optimal performance with limited complexity.

Let us consider the transmission of $N_t$ symbols of a QAM constellation over a MIMO channel with $N_t$ transmit and $N_r$ receive antennas. The channel between the source and the receiver may be represented by a $N_r \times N_t$ complex matrix **H**.

At the receiver, the received symbol y may be represented by a vector of $N_r$ complex entries which is the result of an addition of the linear observation **Hz** and a complex Gaussian noise vector $\eta$ of $N_r$ complex gaussian noise samples. This leads to the following channel model :

$$\mathbf{y} = \mathbf{Hz} + \mathbf{\eta}$$

where $E[\mathbf{zz}^\dagger] = \rho\mathbf{I}$ and $E[\eta\eta^\dagger] = \mathbf{I}$, $\rho$ denotes by definition the signal to noise ratio (SNR), **I** is the identity matrix, E[] denotes the mathematical expectation and $\dagger$ denotes the Hermitian transpose operator.

The receiver performs hard output decisions for MIMO channels, for example in order to get a list of points further used for computing a soft ouput on the bits associated to the transmitted constellation points vector. The receiver performs a combination of several steps in order to modify the channel before a regular Serial Interference Cancellation scheme (SIC).

First, the MIMO channel is for example pre-filtered by a Minimum-Mean-Square-Error (MMSE) Generalized Decision Feedback Equalizer (GDFE) linear filter, then the filtered channel is reduced, for example using a Lenstra-Lenstra-Lovász ( LLL) lattice reduction algorithm and finally decomposed into an upper triangular channel that allows to decode the received constellation point using the SIC strategy.

Finally, the decoded points are converted by the basis change matrix, matrix which is deduced from the lattice reduction.

In the state of art, the above mentioned steps are computed separately.

Let us consider a particular case where the channel complex matrix is characterized by an upper triangular matrix **M**. This leads to the following general channel model

$$\mathbf{y} = \mathbf{Mz} + \mathbf{\eta}$$

This model may be obtained from the MIMO channel model by applying a Cholesky decomposition of $\mathbf{H} = \mathbf{Q_H M}$ into a unitary matrix $\mathbf{Q_H}$ and the upper triangular matrix **M,** and by filtering the received vector y by $\mathbf{Q_H^\dagger}$ as follows

$$\mathbf{y} \leftarrow \mathbf{Q_H^\dagger y} .$$

A lattice reduction step is then applied to reduce $\mathbf{M} = \mathbf{M_r T^{-1}}$ where $\mathbf{M_r}$ is a reduced channel and **T** a unimodular matrix. A unimodular matrix is a square matrix, with gaussian integer entries for the complex case, matrix having determinant equal to +1 or -1.

The lattice reduction breaks the triangular structure of **M.** Then, a QR decomposition $\mathbf{M_r} = \mathbf{QR}$, where **Q** is unitary and R upper triangular, must be computed in order to obtain

$$\mathbf{Q^\dagger y} = \mathbf{RT^{-1}z} + \mathbf{Q^\dagger \eta}$$

where a SIC decoder of $\mathbf{T^{-1}z}$ can be used thanks to the triangular structure of the matrix **R** and exhibits high performance.

The estimation of $\mathbf{z}$ is then obtained by multiplying the decoded estimation of $\mathbf{T}^{-1}\mathbf{z}$ by $\mathbf{T}$.

The paper of Kanglian Zhao (D1) entitled "A low complexity fast lattice reduction algorithm for MIMO detection" published in personal indoor and mobile radio communications, 2012 IEEE 23RD international symposium ON IEEE, September 9, 2012 discloses a low complexity fast lattice reduction algorithm for Mimo detection.

The present invention aims at providing a method and a device which enable to reduce the complexity of the Subspace Latice Reduction Aided Receiver.

To that end, the present invention concerns a method for executing a Lenstra-Lenstra-Lovász lattice reduction in a receiver receiving constellation points through a Multi Input Multi Output channel, from a matrix representing the Multi Input Multi Output channel which is decomposed into a unitary matrix Q, an upper triangular matrix R, and an unimodular matrix T, characterized in that the method comprises the steps of:

- reducing the k-th column of the upper triangular matrix R and updating the unimodular matrix T into a new unimodular matrix, k being a variable indicating the rank of a column within the reduced upper triangular matrix R,
- permuting the k-th and the k-1-th columns of the reduced upper triangular matrix R and of the new unimodular matrix T according to a comparison between the elements of the k-1th and k-th row of the k-th column of the reduced upper triangular matrix R,
- triangularizing the reduced upper triangular matrix R of which columns are permuted into a new reduced upper triangular matrix and updating the unitary matrix Q into a new unitary matrix.

The present invention also concerns a device for executing a Lenstra-Lenstra-Lovasz lattice reduction in a receiver receiving constellation points through a Multi Input Multi Output channel, the Lenstra-Lenstra-Lovász lattice reduction from an upper triangular matrix M of the Multi Input Multi Output channel providing a reduced upper triangular matrix R, a unitary matrix Q and an unimodular matrix T, characterized in that the device comprises:

- means for reducing the k-th column of the upper triangular matrix R and updating the unimodular matrix T into a new unimodular matrix, k being a variable indicating the rank of a column within the reduced upper triangular matrix R,
- means for permuting the k-th and the k-1-th columns of the reduced upper triangular matrix R and of the new unimodular matrix T according to a comparison between the elements of the k-1th and k-th row of the k-th column of the reduced upper triangular matrix R,
- means for triangularizing the reduced upper triangular matrix R of which columns are permuted into a new reduced upper triangular matrix and updating the unitary matrix Q into a new unitary matrix.

Thus, the implementation complexity is kept low by performing a joint reduction and QR operation.

According to a particular feature, the reduced upper triangular matrix R, the unitary matrix Q and the unimodular matrix T satisfy the following formula ,

$$M=QRT^{-1},$$

where M is an upper triangular matrix M of the Multi Input Multi Output channel.

Thus, the decomposition $M=QRT^{-1}$ of the upper triangular matrix M allows for using a SIC decoder on a reduced upper triangular matrix R, which gives high performance and low complexity.

According to a particular feature, the method comprises further step of:

- updating the variable indicating the rank of the column,

And the reducing, the permuting, the triangularization are executed iteratively on the new upper triangular matrix R, the new unimodular matrix and the new unitary matrix.

Thus, the computation of the Lenstra-Lenstra-Lovász lattice reduction is performed in an iterative fashion that improves the decomposition of the upper triangular matrix M of the Multi Input Multi Output channel after each iteration.

According to a particular feature, the new reduced upper triangular matrix R, the new unitary matrix Q and the new unimodular matrix T satisfy the following formula:

$$M=QRT^{-1},$$

where M is the upper triangular matrix M of the Multi Input Multi Output channel.

Thus, the decomposition $M=QRT^{-1}$ of the upper triangular matrix M of the Multi Input Multi Output channel is kept the same during the Lenstra-Lenstra-Lovász lattice reduction computation, which allows for using a SIC decoder on a reduced upper triangular matrix R, which gives high performance and low complexity.

According to a particular feature, the receiver calculates a coefficient $\alpha$ = $\lfloor R_{k-1,k} / R_{k-1,k-1} \rceil$, where $\lfloor . \rceil$ is a rounding operation taking the closest integer on the real and imaginary part independently, $R_{k-1,k}$ is the k-1-th element of the k-th column of R and $R_{k-1,k-1}$ is the k-1-th element of the k-1-th column of R, the reducing of the upper triangular matrix is performed using the following formula $\forall 1 \leq i \leq k-1$, $R_{i,k} \leftarrow R_{i,k} - \alpha R_{i,k-1}$ and the update of the unimodular matrix T is performed according to the following formula:

$$\forall 1 \leq i \leq n, \mathbf{T}_{i,k} \leftarrow \mathbf{T}_{i,k} - \alpha \mathbf{T}_{i,k-1} .$$

Thus, the triangular shape of R is taken into account for saving computations and the matrix R is kept triangular and the matrix T updated accordingly.

According to a particular feature, the permutation is performed if $\delta |R_{k-1,k}|^2 > |R_{k-1,k}|^2 + |R_{k,k}|^2$ wherein $\delta$ is a parameter upper than ½ and lower than or equal to 1.

Thus, the permutation is performed only when the vectors associated to the dimensions k and k-1 have a particular geometrical property.

According to a particular feature, the variable k indicating the rank of the column is updated as: if $\delta |R_{k-1,k}|^2 > |R_{k-1,k}|^2 + |R_{k,k}|^2$ then k ← max(k -1,2), else k ← k + 1.

Thus, the dimension index takes into account the permutation of vectors in the computation process.

According to a particular feature, the variable k indicating the rank of the column is updated as: k ← mod(k -1, n -1) + 2 where mod is the modulo operation.

Thus, the dimension index is easier to compute.

According to a particular feature, the method is executed in a hard output decision algorithm and the size of the upper triangular matrix M is equal to the number of antennas of the source which transmits the constellation points.

Thus, a hard output is obtained with high performance and low complexity.

According to a particular feature, the upper triangular matrix M is obtained using a QR filter and at a first iteration the upper triangular matrix R is equal to the upper triangular matrix M, the unitary matrix Q and the unimodular matrix T are set to the identity matrix.

Thus, after the prefiltering step, the equivalent channel is upper triangular and the invention can be applied.

According to a particular feature, the matrix representing the Multi Input Multi Output channel is obtained using a MMSE-GDFE prefiltering and at a first iteration the upper triangular matrix R is equal to the upper triangular matrix M, the unitary matrix Q and the unimodular matrix T are set to the identity matrix.

Thus, after the MMSE-GDFE prefiltering step, the equivalent channel is upper triangular and has better geometrical properties and the invention can be applied and shows improved performance.

According to a particular feature, the method is executed in a soft output decision algorithm and the size of the upper triangular matrix M is equal to the number of antennas minus one of a source which transmits the constellation points.

Thus, a soft output providing high performance can be computed with limited complexity.

According to a particular feature, the contribution of assumed transmitted symbols are subtracted from the received contellation points and a prefiltering which takes into account the subtraction is performed in order to provide the upper triangular matrix.

Thus, a soft output providing even higher performance can be computed with limited complexity.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless system in which the present invention is implemented;
Fig. 2 is a diagram representing the architecture of a receiver in which the present invention is implemented;
Fig. 3 discloses a block diagram of components of the wireless interface of the receiver in a mode of realization wherein the receiver performs hard output decisions for MIMO channel;
Fig. 4 discloses an algorithm which is executed for the $N_r \times N_t$ paths betewen the source and the receiver in a mode of realization wherein the receiver performs hard output decisions for MIMO channel;
Fig. 5 represents an algorithm which performs the joint QR decomposition and effective LLL reduction according to the present invention;

Fig. 6 discloses a block diagram of components of the wireless interface of the receiver in a mode of realization wherein the receiver performs soft output decisions for MIMO channel;

Fig. 7 is an algorithm for a soft output decoding of the received constellation points according to a particular mode of realization of the present invention.

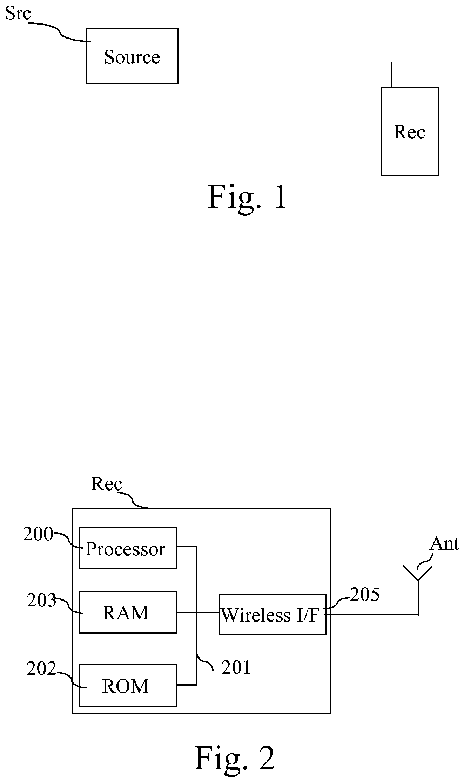

**Fig. 1** represents a wireless system in which the present invention is implemented.

The present invention will be disclosed in an example in which the signals transferred by a source Src are transferred to receivers Rec.

For example, the source Src may be included in a satellite or in a terrestrial transmitter and broadcasts signals to at least one receiver, the source Scr may also transfer signals to a single receiver Rec.

The receiver Rec may be a mobile terminal to which data like video signals are transferred.

According to the invention, the receiver Rec executes a Lenstra-Lenstra-Lovász lattice reduction in a receiver receiving constellation points through a Multi Input Multi Output channel, the Lenstra-Lenstra-Lovász lattice reduction being computed from an upper triangular matrix M of the Multi Input Multi Output channel and providing a reduced upper triangular matrix R, a unitary matrix Q and an unimodular matrix T. The receiver Rec:

- reduces the k-th column of the reduced upper triangular matrix R and updating the unimodular matrix T, k being a variable indicating the rank of a column within the reduced upper triangular matrix R,
- permutes the k-th and the k-1-th columns of the reduced upper triangular matrix R and of the unimodular matrix T according to a comparison between the elements of the k-1th and k-th row of the k-th column of the reduced upper triangular matrix R,
- triangularizes the reduced upper triangular matrix R and updating the unitary matrix Q,
- updates the variable indicating the rank of the column,
- executes the reducing, the permuting, the triangularizing and the updating as far as the variable indicating the rank of the column is equal to a predetermined value.

**Fig. 2** is a diagram representing the architecture of a receiver in which the present invention is implemented.

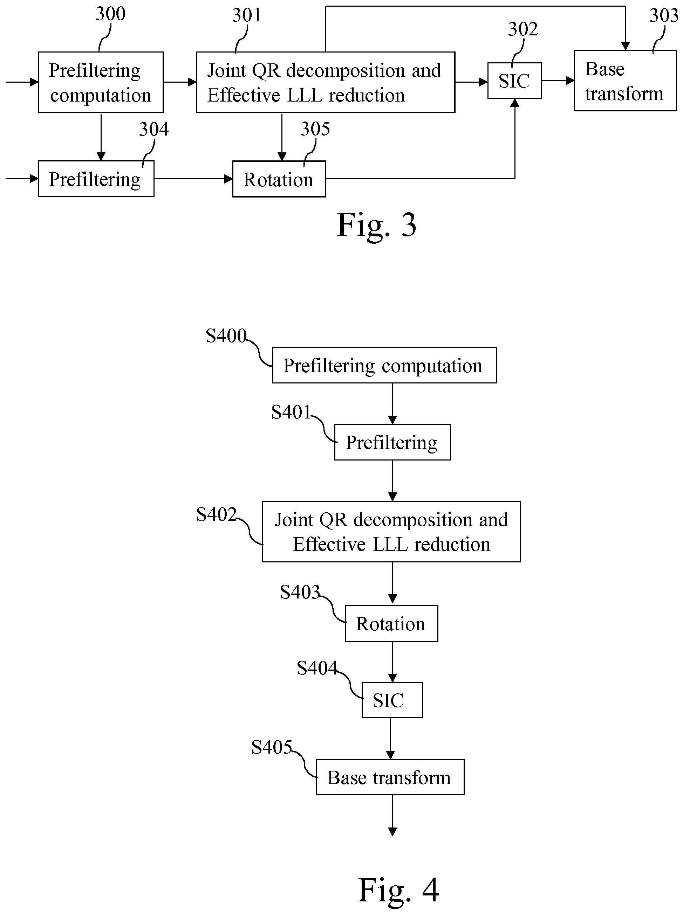

The receiver Rec has, for example, an architecture based on components connected together by a bus 201 and a processor 200 controlled by the program as disclosed in Figs. 4, 5 and 7.

It has to be noted here that the receiver Rec may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the programs related to the algorithm as disclosed in Figs. 4, 5 and 7.

The processor 200 controls the operation of the wireless interface 205.

The read only memory 202 contains instructions of the programs related to the algorithms as disclosed in Figs. 4, 5 and 7, which are transferred, when the receiver Rec is powered on, to the random access memory 203.

Any and all steps of the algorithms described hereafter with regard to Figs. 4, 5 and 7 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the receiver Rec includes circuitry, or a device including circuitry, causing the receiver Rec to perform the steps of the algorithms described hereafter with regard to Figs. 4, 5 and 7.

The wireless interface 205 comprises components as disclosed in Fig. 3.

**Fig. 3** discloses a block diagram of components of the wireless interface of the receiver in a mode of realization wherein the receiver performs hard output decisions for MIMO channel.

According to the invention, the effective LLL algorithm is modified in order to jointly perform the QR decomposition, the LLL reduction and the computation of **T** with an efficient computational complexity. The output R of the joint QR decomposition and effective LLL reduction module 301 is provided to a SIC module 302, the output Q of the joint QR decomposition and effective LLL reduction module 301 is provided to a Rotation module 305 and the output T of the joint QR decomposition and effective LLL reduction module 301 is provided to the base transform module 303.

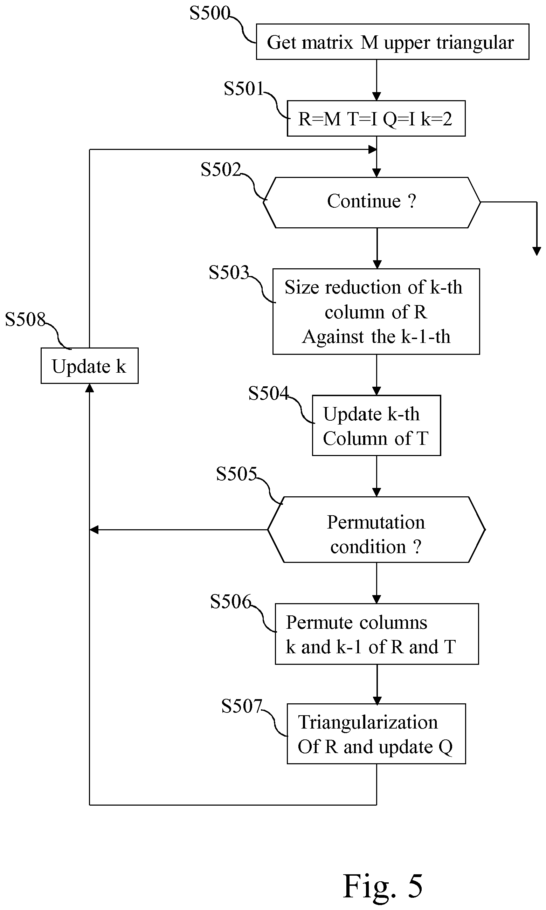

The joint QR decomposition and effective LLL reduction module 301 performs, according to the present invention, a joint QR decomposition and an effective LLL reduction. The joint QR decomposition and effective LLL reduction module 301 executes the algorithm disclosed in Fig. 5.

The prefiltering computation module 300, from a channel estimate **H** between the source Src and the receiver Rec, performs a prefiltering computation by a prefiltering matrix that converts the initial channel into a new one which is easier to decode as it is modelized into an upper triangular matrix, or allows to provide improved performance, such as a QR filter as described in Lai, T.X.; Muruganathan, S.D.; Sesay, A.B., "SPC07-3: An Iterative QR-SIC Receiver for Concatenated Space Frequency Coding Schemes in Severe Multipath Channels," Global Telecommunications Conference, 2006. GLOBECOM '06. IEEE, vol., no., pp.1,5, Nov. 27 2006-Dec. 1 2006 or a MMSE-GDFE pre-filter as described in "MMSE-GDFE Lattice Decoding for Under-determined Linear Channels", Mohamed Oussama Damen, Hesham El Gamal and Giuseppe Caire, International Symposium on Information Theory, 2004.

The upper triangular matrix computed by the prefiltering computation module 300 is provided to the joint QR decomposition and effective LLL reduction module 301 and the prefiltering matrix is provided to the prefiltering module 304.

The prefiltering module 304 prefilters the received constellation points using the prefiltering matrix provided by the prefiltering computation module 300.

The prefiltered received constellation points are provided to the rotation module 305 which rotates the prefiltered received constellation points according to the output Q of the joint QR decomposition and effective LLL reduction module 301.

The output of the Rotation module 305 is provided to the SIC module 302.

The Sic module performs a regular Serial Interference Cancellation scheme on the rotated prefiltered received constellation points provided by the rotation module 305 based on the output R of the joint QR decomposition and effective LLL reduction module 301 is provided to a SIC module 302.

The output of the SIC module 302 is provided to the base transform module which performs a base transform on the output of the SIC module 302 based on the the output T of the joint QR decomposition and effective LLL reduction module 301.

**Fig. 4** discloses an algorithm which is executed for the $N_r \times N_t$ paths between the source and the receiver.

At step S400, a prefiltering computation is performed based on a channel estimate **H** between the source Src and the receiver Rec. The prefiltering step provides a prefiltering matrix and a prefiltered channel in the form of an upper triangular matrix for example using a QR filter or a MMSE-GDFE filter as disclosed in Lai, T.X.; Muruganathan, S.D.; Sesay, A.B., "SPC07-3: An Iterative QR-SIC Receiver for Concatenated Space Frequency Coding Schemes in Severe Multipath Channels," Global Telecommunications Conference, 2006. GLOBECOM '06. IEEE, vol., no., pp. 1,5, Nov. 27 2006-Dec. 1 2006.

At step S401, a prefiltering is performed on the received constellation points based on the prefiltering matrix computed at step S400.

At step S402, a joint QR decomposition and an effective LLL reduction is performed. According to the invention, the effective LLL algorithm is modified in order to jointly perform the QR decomposition, the LLL reduction and the computation of **T** with an efficient computational complexity. The step S402 will be disclosed with more details in reference to Fig. 5.

At step S403, a rotation is performed on the prefiltered received constellation points using the output Q of the joint QR decomposition and effective LLL reduction step.

At step S404, a SIC computation is performed using the output of the rotation step and the equivalent channel output R of the joint QR decomposition and effective LLL reduction step.

At step S405, a base transform is performed on the output of the SIC step using the output T of the joint QR decomposition and effective LLL reduction step.

**Fig. 5** represents an algorithm which performs the joint QR decomposition and effective LLL reduction according to the present invention.

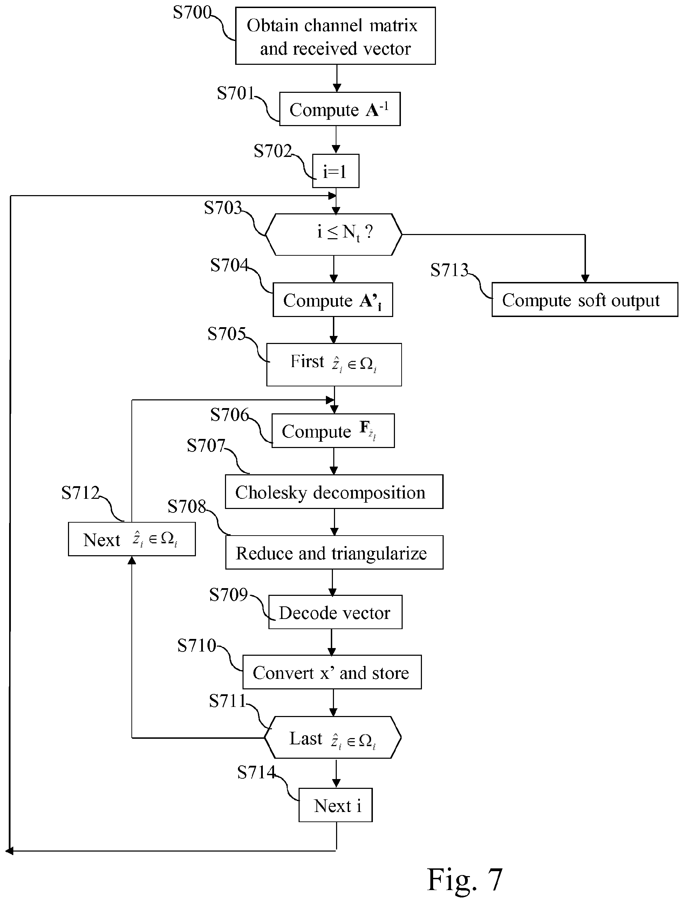

At step S500, the upper triangular matrix M is obtained. The upper triangular matrix M is for example obtained from the prefiltering computation step of Fig. 4. The matrix M is for example obtained by applying a QR decomposition of $H = Q_H M$. The matrix M is a n*n matrix. If the present algorithm is executed for a hard output decision for MIMO channel, n is equal to $N_t$, if the present algorithm is executed for a soft output decision as illustrated in Fig. 7 for MIMO channel, n is equal to $N_t -1$. At the same step, a parameter $1/2 < \delta \leq 1$ is obtained.

At next step S501, the matrix R is set equal to the matrix M, the matrix T is set to the identity matrix I, the matrix Q is set to the identity matrix I and the variable k is set equal to two.

At next step S502, it is checked if $k \leq n$.

If $k \leq n$, the next step of the algoritm is S503, otherwise, the present algorithm is interrupted.

Alternatively, a number of iteration is monitored and the algorithm stops if a predetermined amount of iteration is attained.

At step S503, a size reduction of the k-th column of R against the k-1th column of R is performed. A coefficient $\alpha$ is determined as $\alpha = \lfloor R_{k-1,k} / R_{k-1,k-1} \rceil$, where $\lfloor . \rceil$ is a rounding operation taking the closest integer on the real and imaginary part independently. The computation for the coefficient $\alpha$ is reduced by taking into account the upper triangular shape of **R**.

The size reduction of R is then performed as :

$$\forall 1 \le i \le k-1, \mathbf{R}_{i,k} \leftarrow \mathbf{R}_{i,k} - \alpha \mathbf{R}_{i,k-1}$$

This computation is reduced by taking into account the triangular shape of R.

At step S504, the k-th column of T is updated as:

$$\forall 1 \le i \le n, \mathbf{T}_{i,k} \leftarrow \mathbf{T}_{i,k} - \alpha \mathbf{T}_{i,k-1} \ .$$

At next step S505, it is checked if a permutation needs to be performed. The permutation is performed if $\delta$ $|R_{k-1,k}|^2 > |R_{k-1,k}|^2 + |R_{k,k}|^2$.

If no permutation needs to be performed, the algorithm moves to step S508. Otherwise the algorithm moves to step S506.

At step S506, the permutation of k-th and k-1-th columns of **R** and **T** are performed.

At step S507, the re-triangularization of **R** and update of **Q** is performed.

The re-triangularization of **R** and update of **Q** may be computed as follows.

For example a QR decomposition is performed that leads to **R = GR'** and the update of **R** corresponds to **R'**. The update of **Q** is **GQ.**

For example, as only the rows k and k-1 break the triangular structure, the $2 \times 2$ matrix $\mathbf{R}_{[k-1,k],[k-1,k]}$ **= GR'** is extracted and decomposed. The notation $A_{[i,j],[k,1]}$ denotes the extraction of the j-i+1×1-k+1 matrix from the rows i to j and columns k to 1 of the matrix **A** .

The update **of R** is then **R:** $\mathbf{R}_{[k-1,k],[1,n]} \leftarrow \mathbf{G}^\dagger \mathbf{R}_{[k-1,k],[1,n]}.$

The update of **Q** is then **Q :** $\mathbf{Q}_{[1,n],[k-1,k]} \leftarrow \mathbf{Q}_{[1,n],[k-1,k]} \mathbf{G}.$

The computation of **G** may be performed as:

$$\mathbf{G}^\dagger = \begin{bmatrix} \cos\theta_1 e^{j\theta_2} & \sin\theta_1 e^{j\theta_3} \\ -\sin\theta_1 e^{j\theta_2} & \cos\theta_1 e^{j\theta_3} \end{bmatrix}$$

where

$$\theta_1 = \mathrm{atan}(|R_{k,k-1}|/|R_{k-1,k-1}|), \ \theta_2 = -\arg(R_{k-1,k-1}) \ \text{and} \ \theta_3 = -\arg(R_{k,k-1}),$$

where arg is the argument of a complex number, or in other words its angle in polar coordinates.

At step S508, the variable k is updated as: if $\delta |R_{k-1,k}|^2 > |R_{k-1,k}|^2 + |R_{k,k}|^2$ then $k \leftarrow \max(k-1,2)$, else $k \leftarrow k+1$.

Alternatively, the variable k is updated as: $k \leftarrow \mathrm{mod}(k-1,n-1)+2$ where mod is the modulo operation.

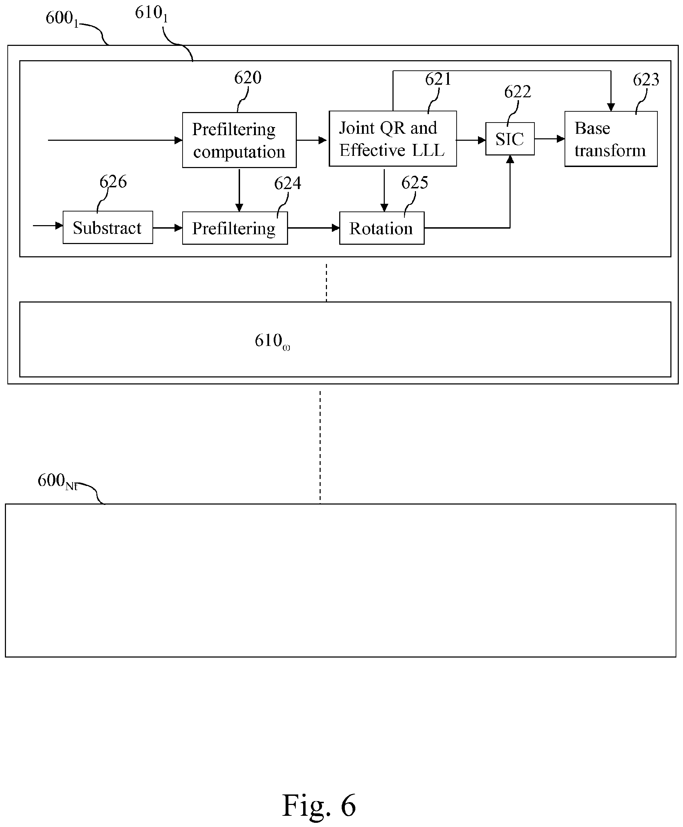

**Fig. 6** discloses a block diagram of components of the wireless interface of the receiver in a mode of realization wherein the receiver performs soft output decisions for MIMO channel by using a SLRAD architecture.

The wireless interface 205 comprises Nt modules $600_1$ to $600_{Nt}$. Each module $600_1$ to $600_{Nt}$ comprises $\omega$ modules $610_1$ to $610_\omega$. $\omega$ is the total number of possible constellation points for each of the $N_t$ antennas.

Each module $610_1$ to $610_\omega$ comprises a prefiltering computation module 620, a joint QR and effective LLL reduction module 621, a SIC module 622, a base transform module 623, a subtracting module 626, a prefiltering module 624 and a rotation module 625.

The prefiltering computation module 620 computes a prefilter that provides a new channel in the form of an upper triangular matrix as follows:

Let us define $\mathbf{e}_i$ as a row vector of size $N_t$ comprising all zeros entries but in the i -th position having a one. $\mathbf{e}_i\mathbf{x}$ denotes the selection of the i -th element $x_i$ of the vector **x.**

We define the $N_t$ -1×$N_t$ matrix $\mathbf{E}_i$ as an $N_t \times N_t$ identity matrix from which the i -th row have been removed as

$\mathbf{E}_i\mathbf{x}$ removes the i -th element $x_i$ from the vector **x**. As a result, it can be noted that $\mathbf{E}_i^\dagger \mathbf{E}_i + \mathbf{e}_i^\dagger \mathbf{e}_i = \mathbf{I}$ .

Thus, when we assume that the i-th component of the transmitted vector is $\hat{z}_i$, its contribution $\mathbf{H}\mathbf{e}_i^\dagger \hat{z}_i$ can be removed from the received point, this leads to the following equivalent channel model

$$\mathbf{y} - \mathbf{H}\mathbf{e}_i^\dagger \hat{z}_i = \mathbf{H}(\mathbf{z} - \mathbf{e}_i^\dagger \hat{z}_i) + \boldsymbol{\eta} = \mathbf{H}\mathbf{E}_i^\dagger \mathbf{E}_i \mathbf{z} + \mathbf{H}\mathbf{e}_i^\dagger (z_i - \hat{z}_i) + \boldsymbol{\eta}$$

We can observe in the equivalent channel model that the equivalent noise $\mathbf{H}\mathbf{e}_i^\dagger (z_i - \hat{z}_i) + \boldsymbol{\eta}$ depends both on the really transmitted symbol $z_i$ which is unknown to the receiver and on its assumed value $\hat{z}_i$.

According to the invention, the $Nt*\omega$ modules 610 consider that all the possible symbols $\hat{z}_i$ are transmitted and a MMSE filter $\mathbf{F}_{\hat{z}_i}$ is applied accordingly, leading to the model

$$\mathbf{F}_{\hat{z}_i}(\mathbf{y} - \mathbf{H}\mathbf{e}_i^\dagger \hat{z}_i) = \mathbf{z}'_i + \boldsymbol{\eta}'_i$$

where $\mathbf{z}'_i = \mathbf{E}_i \mathbf{z}$ carries $N_t - 1$ constellation symbols to be decoded. By using $\mathbf{E}_i \mathbf{e}_i^\dagger = \mathbf{0}$ and $\mathbf{E}_i \mathbf{E}_i^\dagger = \mathbf{I}$ :

$$\boldsymbol{\eta}'_i = \mathbf{E}_i \left[ (\mathbf{E}_i^\dagger \mathbf{F}_{\hat{z}_i} \mathbf{H} - \mathbf{I})(\mathbf{z} - \mathbf{e}_i^\dagger \hat{z}_i) + \mathbf{E}_i^\dagger \mathbf{F}_{\hat{z}_i} \boldsymbol{\eta} \right].$$

The linear filter $\mathbf{F}_{\hat{z}_i}$ is optimized so as to minimize the MSE, which leads to, by using $E[z] = 0$ :

$$\mathbf{F}_{\hat{z}_i} = \mathbf{E}_i (\rho \mathbf{I} + \mathbf{e}_i^\dagger \mathbf{e}_i \mid \hat{z}_i \mid^2)\mathbf{H}^\dagger \left( \mathbf{H}(\rho \mathbf{I} + \mathbf{e}_i^\dagger \mathbf{e}_i \mid \hat{z}_i \mid^2)\mathbf{H}^\dagger + \mathbf{I} \right)^{-1}$$

which after mathematical manipulation is equal to

$$\mathbf{F}_{\hat{z}_i} = \mathbf{E}_i \left( \mathbf{I} + \frac{\mathbf{A}^{-1}\mathbf{e}_i^\dagger \mathbf{e}_i}{\frac{\rho(\rho + \mid \hat{z}_i \mid^2)}{\mid \hat{z}_i \mid^2} + \mathbf{e}_i \mathbf{A}^{-1}\mathbf{e}_i^\dagger} \right) \mathbf{A}^{-1}\mathbf{H}^\dagger$$

where $A = \mathbf{H}^\dagger \mathbf{H} + \rho^{-1}\mathbf{I}$. That expression allows to reduce the implementation complexity.

Indeed, only one matrix inversion $\mathbf{A}^{-1}$ is done in common for all the $\mathbf{F}_{\hat{z}_i}$ associated to the same initial channel matrix $\mathbf{H}$.

In the worst case, for example when the MIMO channel $\mathbf{H}$ changes at each channel use, the matrix inversion $\mathbf{A}^{-1}$ is common for the $\omega.N_t$ modules 610.

The equivalent noise $\eta'_i$ being correlated:

$$E[\boldsymbol{\eta}'_i \boldsymbol{\eta}'^\dagger_i] = \mathbf{E}_i \left( \mathbf{A} - \mathbf{e}_i^\dagger \mathbf{e}_i \frac{\mid \hat{z}_i \mid^2}{\rho(\rho + \mid \hat{z}_i \mid^2)} \right)^{-1} \mathbf{E}_i^\dagger$$

we then apply an upper triangular noise whitening filter $\mathbf{W}_{\hat{z}_i}$ such that $E[\mathbf{W}_{\hat{z}_i} \boldsymbol{\eta}'_i \boldsymbol{\eta}'^\dagger_i \mathbf{W}_{\hat{z}_i}^\dagger] = \mathbf{I}$ , given by

$$\mathbf{W}_{\hat{z}_i}^\dagger \mathbf{W}_{\hat{z}_i} = \left( \mathbf{E}_i \left( \mathbf{A} - \mathbf{e}_i^\dagger \mathbf{e}_i \frac{\mid \hat{z}_i \mid^2}{\rho(\rho + \mid \hat{z}_i \mid^2)} \right)^{-1} \mathbf{E}_i^\dagger \right)^{-1} )$$

$$= \mathbf{A}'_i \mathbf{E}_i \mathbf{A}^{-1} \left( \mathbf{A} - \beta \mathbf{e}_i^\dagger \mathbf{e}_i \right) \mathbf{A}^{-1} \mathbf{E}_i^\dagger \mathbf{A}'_i$$

where $\mathbf{A}'_i = \left( \mathbf{E}_i \mathbf{A}^{-1} \mathbf{E}_i^\dagger \right)^{-1}$ is only computed for each new dimension i, but not for any $\hat{z}_i$, and where

$$\beta = \left( \frac{\rho(\rho + |\hat{z}_i|^2)}{|\hat{z}_i|^2} + \mathbf{e}_i \mathbf{A}^{-1} \mathbf{e}_i^\dagger + \mathbf{e}_i \mathbf{A}^{-1} \mathbf{E}_i^\dagger \mathbf{A}'_i \mathbf{E}_i \mathbf{A}^{-1} \mathbf{e}_i^\dagger \right)^{-1} .$$

The matrix $\mathbf{W}_{\hat{z}_i}$ is obtained from a Cholesky decomposition, and the new channel model is

$$\mathbf{W}_{\hat{z}_i} \mathbf{F}_{\hat{z}_i} (\mathbf{y} - \mathbf{H} \mathbf{e}_i^\dagger \hat{z}_i) = \mathbf{W}_{\hat{z}_i} \mathbf{z}'_i + \boldsymbol{\eta}''_i$$

where $\boldsymbol{\eta}''_i$ is non-correlated and the new channel $\mathbf{W}_{\hat{z}_i}$ is upper triangular.

The prefiltering $\mathbf{W}_{\hat{z}_i} \mathbf{F}_{\hat{z}_i}$ is provided to the block 624 and the new channel $\mathbf{W}_{\hat{z}_i}$ to the block 621.

The received constellation points are processed by the subtracting module 626. The subtracting module 626 performs the following operation on the received constellation points: $(\mathbf{y} - \mathbf{H} \mathbf{e}_i^\dagger \hat{z}_i)$.

The output of the subtracting module 626 is provided to the prefiltering module 624 which performs a prefiltering as follows: $\mathbf{W}_{\hat{z}_i} \mathbf{F}_{\hat{z}_i}$ to $(\mathbf{y} - \mathbf{H} \mathbf{e}_i^\dagger \hat{z}_i)$, which provides the upper triangular matrix $\mathbf{W}_{\hat{z}_i}$ as the new channel matrix to be considered for decoding $\mathbf{z}'_i$.

According to the invention, the effective LLL algorithm is modified in order to jointly perform the QR decomposition, the LLL reduction and the computation of **T** with an efficient computational complexity. The output R of the joint QR decomposition and effective LLL reduction module 621 is provided to a SIC module 622, the output Q of the joint QR decomposition and effective LLL reduction module 621 is provided to a rotation module 625 and the output T of the joint QR decomposition and effective LLL reduction module 621 is provided to the base transform module 623.

The joint QR decomposition and effective LLL reduction module 621 performs, according to the present invention, a joint QR decomposition and an effective LLL reduction of $\mathbf{W}_{\hat{z}_i}$. The joint QR decomposition and effective LLL reduction module 621 executes the algorithm disclosed in Fig. 5.

The prefiltered constellation points are provided to the rotation module 625 which rotates the prefiltered constellation points according to the output Q of the joint QR decomposition and effective LLL reduction module 621.

The output of the rotation module 305 is provided to the SIC module 622.

The SIC module 622 performs a regular Serial Interference Cancellation scheme on the constellation points provided by the rotation module 625 based on the output R of the joint QR decomposition and effective LLL reduction module 621 is provided to a SIC module 302.

The output of the SIC module 622 is provided to the base transform module which performs a base transform on the output of the SIC module 622 based on the the output T of the joint QR decomposition and effective LLL reduction module 621.

**Fig. 7** is an algorithm for a soft output decoding of the received constellation points according to a particular mode of realization of the present invention.

More precisely, the present algorithm is executed by the processor 200 of the receiver Rec.

At step S700, the processor 200 obtains an $N_r \times N_t$ channel matrix **H**, a vector **y** of received constellation points.

At next step S701, the processor 200 computes the matrix $\mathbf{A}^{-1} = (\mathbf{H}^\dagger \mathbf{H} + \rho^{-1} \mathbf{I})^{-1}$ .

At next step S702, the processor 200 sets the variable i to one.

At next step S703, the processor 200 checks if $i \leq N_t$

If $i \leq N_t$, the processor 200 moves to step S704. Otherwise, the processor 20 moves to step S713.

At step S704, the processor 200 computes the matrix $\mathbf{A}'_i = \left( \mathbf{E}_i \mathbf{A}^{-1} \mathbf{E}_i^\dagger \right)^{-1}$ .

At next step S705, the processor 200 selects a first contellation point $\hat{z}_i \in \Omega_i$ where $\Omega_i$ is the constellation used for transmission on dimension i.

At next step S706, the processor 200 computes $\mathbf{F}_{\hat{z}_i}$ :

$$\mathbf{F}_{\hat{z}_i} = \mathbf{E}_i \left( \mathbf{I} + \frac{\mathbf{A}^{-1}\mathbf{e}_i^\dagger \mathbf{e}_i}{\frac{\rho(\rho+|\hat{z}_i|^2)}{|\hat{z}_i|^2} + \mathbf{e}_i \mathbf{A}^{-1}\mathbf{e}_i^\dagger} \right) \mathbf{A}^{-1}\mathbf{H}^\dagger$$

At next step S707, the processor 200 performs a cholesky decomposition in order to obtain the matrix $\mathbf{W}_{\hat{z}_i}$

$$\mathbf{W}_{\hat{z}_i}^\dagger \mathbf{W}_{\hat{z}_i} = \mathbf{A}_i' \mathbf{E}_i \mathbf{A}^{-1} \left( \mathbf{A} - \beta \mathbf{e}_i^\dagger \mathbf{e}_i \right) \mathbf{A}^{-1} \mathbf{E}_i^\dagger \mathbf{A}_i'$$

where

$$\beta = \left( \frac{\rho(\rho+|\hat{z}_i|^2)}{|\hat{z}_i|^2} + \mathbf{e}_i \mathbf{A}^{-1}\mathbf{e}_i^\dagger + \mathbf{e}_i \mathbf{A}^{-1}\mathbf{E}_i^\dagger \mathbf{A}_i' \mathbf{E}_i \mathbf{A}^{-1}\mathbf{e}_i^\dagger \right)^{-1}.$$

At next step S708, the processor 200 reduces and triangularizes the channel $\mathbf{W}_{\hat{z}_i} = \mathbf{QRT}^{-1}$ preferably using the algorithm as disclosed in Fig. 5.

At next step S709, the processor 200 decodes the vector $\mathbf{Q}^\dagger \mathbf{W}_{\hat{z}_i} \mathbf{F}_{\hat{z}_i} \left( \mathbf{y} - \mathbf{H}\mathbf{e}_i^\dagger \hat{z}_i \right)$ according to the upper triangular channel $\mathbf{R}$ and gets a decoded vector $\mathbf{x}'$.

At next step S710, the processor 200 converts x' as equal to $\mathbf{Tx}$ and stores it into a list of constellation points.

At next step S711, the processor 200 checks if contellation point $\hat{z}_i \in \Omega_i$ is the last constellation point.

If $\hat{z}_i$ is the last constellation point, the processor 200 moves to step S714. Otherwise the processor 200 moves to step S712.

At step S714, the processor 200 increments the variable i and returns to step S703.

At step S712, the processor 200 selects another constellation point and returns to step S706.

At step S713, the processor 200 computes the soft output based on the list of constellation points.

The vector of $N_t$ constellation symbols $\mathbf{z}$ is associated to a vector of $\omega.N_t$ bits via a binary labelling operation. The soft output $\xi(u)$ of the u-th bit is given for example by the following expression

$$\xi(u) = \frac{\displaystyle\sum_{z' \in \Upsilon_1(u)} e^{-\frac{\|\mathbf{y}-\mathbf{Hz}'\|^2}{2}}}{\displaystyle\sum_{z'' \in \Upsilon_1(u)} e^{-\frac{\|\mathbf{y}-\mathbf{Hz}''\|^2}{2}} + \sum_{z''' \in \Upsilon_0(u)} e^{-\frac{\|\mathbf{y}-\mathbf{Hz}'''\|^2}{2}}}$$

where $\Upsilon_1(u)$ denotes the list of points $\mathbf{z}$ obtained by the algorithms, such that their binary labelling have a 1 in their u-th position, and where $\Upsilon_0(u)$ denotes the list of points $\mathbf{z}$ obtained by the algorithms, such that their binary labelling have a 0 in their u-th position, and where $\mathbf{H}$ is the $N_r \times N_t$ channel matrix, and $\mathbf{y}$ the vector of received constellation points.

Naturally, many modifications can be made to the embodiments of the invention described above without departing from the scope of the present invention, as defined by the appended claims.

**Claims**

1. Method for decoding received symbols by a receiver using a Lenstra-Lenstra-Lovász lattice reduction in a receiver receiving constellation points through a Multi Input Multi Output channel, from a matrix representing the Multi Input Multi Output channel which is decomposed into a unitary matrix Q, an upper triangular matrix R, and an unimodular matrix T, **characterized in that** the reduced upper triangular matrix R, the unitary matrix Q and the unimodular matrix T satisfy the following formula:

$$M = QRT^{-1},\ \text{where M is an upper triangular matrix M of the Multi Input Multi}$$

where M is an upper triangular matrix M of the Multi Input Multi Output channel, the method is executed in a soft output decision algorithm and the size of the upper triangular matrix M is equal to the number of antennas $N_t$ minus one of a source which transmits the constellation points, contributions of assumed transmitted symbols are subtracted from the received constellation points and a prefiltering which takes into account the subtraction is performed in order to provide the upper triangular matrix M, the prefiltering (S401) $W_{\hat{z}_i} F_{\hat{z}_i}$ being performed according to the following formula:

$$F_{\hat{z}_i} = E_i \left( I + \frac{A^{-1} e_i^\dagger e_i}{\frac{\rho(\rho + |\hat{z}_i|^2)}{|\hat{z}_i|^2} + e_i A^{-1} e_i^\dagger} \right) A^{-1} H^\dagger,$$

where $e_i$ is a row vector of size $N_t$ comprising all zeros entries but in the i-th position having a one, $A = H^\dagger H + \rho^{-1} I$, $\hat{z}_i$ is the i-th component of the transmitted vector of received symbols, $H$ is a channel estimate between the source and the receiver, $\rho$ is the signal to noise ratio, $I$ is the identity matrix and $E_i$ is as an $N_t \times N_t$ identity matrix from which the i-th row is removed,

$$W_{\hat{z}_i}^\dagger W_{\hat{z}_i} = A'_i E_i A^{-1} \left( A - \beta e_i^\dagger e_i \right) A^{-1} E_i^\dagger A'_i$$

where

$$\beta = \left( \frac{\rho(\rho + |\hat{z}_i|^2)}{|\hat{z}_i|^2} + e_i A^{-1} e_i^\dagger + e_i A^{-1} E_i^\dagger A'_i E_i A^{-1} e_i^\dagger \right)^{-1}., \quad A'_i = \left( E_i A^{-1} E_i^\dagger \right)^{-1}.$$

the method comprises the steps of:

- reducing (S503) the k-th column of the upper triangular matrix R and updating the unimodular matrix T into a new unimodular matrix, k being a variable indicating the rank of a column within the reduced upper triangular matrix R,
- permuting (S506) the k-th and the k-1-th columns of the reduced upper triangular matrix R and of the new unimodular matrix T according to a comparison between the elements of the k-1th and k-th row of the k-th column of the reduced upper triangular matrix R,
- triangularizing (S507) the reduced upper triangular matrix R of which columns are permuted into a new reduced upper triangular matrix and updating the unitary matrix Q into a new unitary matrix.

2. Method according to claim 1, **characterized in that** the method comprises further step of:
updating the variable indicating the rank of the column, and the reducing, the permuting, the triangularization are executed iteratively on the new upper triangular matrix R, the new unimodular matrix and the new unitary matrix.

3. Method according to claim 2, **characterized in that** the new reduced upper triangular matrix R, the new unitary matrix Q and the new unimodular matrix T satisfy the following formula ,

$$M = QRT^{-1},\ \text{where M is the upper triangular matrix M of the Multi Input Multi}$$

where M is the upper triangular matrix M of the Multi Input Multi Output channel.

4. Method according to any of the claims 1 to 3, **characterized in that** the method comprises further step of

- calculating a coefficient $\alpha = \lceil R_{k-1,k} / R_{k-1,k-1} \rfloor$, where $\lceil . \rfloor$ is a rounding operation taking the closest integer on the real and imaginary part independently, $\mathbf{R}_{k-1,k}$ is the k-1-th element of the k column of R and $\mathbf{R}_{k-1,k-1}$ is the k-1-th element of the k-1-th column of R,, the reducing of the upper triangular matrix is performed using the following formula $\forall 1 \leq i \leq k-1, \mathbf{R}_{i,k} \leftarrow \mathbf{R}_{i,k} - \alpha \mathbf{R}_{i,k-1}$ and the update of the unimodular matrix T is performed according to the following formula:

$$\forall 1 \leq i \leq n, \mathbf{T}_{i,k} \leftarrow \mathbf{T}_{i,k} - \alpha \mathbf{T}_{i,k-1}.$$

5. Method according to claim 4, **characterized in that** the permutation is performed if $\delta|R_{k-1,k}|^2 > |R_{k-1,k}|^2 + |R_{k,k}|^2$ wherein $\delta$ is a parameter upper than ½ and lower than or equal to 1.

6. Method according to claim 5, **characterized in that** the variable k indicating the rank of the column is updated as: if $\delta|R_{k-1,k}|^2 > |R_{k-1,k}|^2 + |R_{k,k}|^2$ then k ← max(k-1,2), else k←k+1.

7. Method according to claim 5, **characterized in that** the variable k indicating the rank of the column is updated as: k ← mod(k-1, n-1) + 2 where mod is the modulo operation.

8. Device for decoding received symbols by a receiver using a Lenstra-Lenstra-Lovász lattice reduction in a receiver receiving constellation points through a Multi Input Multi Output channel, from a matrix representing the Multi Input Multi Output channel which is decomposed into a unitary matrix Q, an upper triangular matrix R, and an unimodular matrix T, **characterized in that** the reduced upper triangular matrix R, the unitary matrix Q and the unimodular matrix T satisfy the following formula :

$$M = QRT^{-1}, \text{ where M is an upper triangular matrix M of the Multi Input Multi}$$

where M is an upper triangular matrix M of the Multi Input Multi Output channel, the device executes a soft output decision algorithm and the size of the upper triangular matrix M is equal to the number of antennas $N_t$ minus one of a source which transmits the constellation points, contributions of assumed transmitted symbols are subtracted from the received constellation points and a prefiltering which takes into account the subtraction is performed in order to provide the upper triangular matrix M, the prefiltering $\mathbf{W}_{\hat{z}_i} \mathbf{F}_{\hat{z}_i}$, i being performed according to the following formula:

$$\mathbf{F}_{\hat{z}_i} = \mathbf{E}_i \left( \mathbf{I} + \frac{\mathbf{A}^{-1}\mathbf{e}_i^{\dagger}\mathbf{e}_i}{\frac{\rho(\rho + |\hat{z}_i|^2)}{|\hat{z}_i|^2} + \mathbf{e}_i\mathbf{A}^{-1}\mathbf{e}_i^{\dagger}} \right) \mathbf{A}^{-1}\mathbf{H}^{\dagger},$$

where $\mathbf{e}_i$ is a row vector of size $N_t$ comprising all zeros entries but in the i -th position having a one, $\mathbf{A} = \mathbf{H}^{\dagger}\mathbf{H} + \rho^{-1}\mathbf{I}$, $\hat{z}_i$ is the i-th component of the transmitted vector of received symbols, **H** is a channel estimate between the source and the receiver, $\rho$ is the signal to noise ratio, **I** is the identity matrix and $\mathbf{E}_i$ is as an $N_t \times N_t$ identity matrix from which the i-th row is removed,

$$\mathbf{W}_{\hat{z}_i}^{\dagger}\mathbf{W}_{\hat{z}_i} = \mathbf{A}_i'\mathbf{E}_i\mathbf{A}^{-1}\left(\mathbf{A} - \beta\mathbf{e}_i^{\dagger}\mathbf{e}_i\right)\mathbf{A}^{-1}\mathbf{E}_i^{\dagger}\mathbf{A}_i'$$

where

$$\beta = \left(\frac{\rho(\rho + |\hat{z}_i|^2)}{|\hat{z}_i|^2} + \mathbf{e}_i\mathbf{A}^{-1}\mathbf{e}_i^{\dagger} + \mathbf{e}_i\mathbf{A}^{-1}\mathbf{E}_i^{\dagger}\mathbf{A}_i'\mathbf{E}_i\mathbf{A}^{-1}\mathbf{e}_i^{\dagger}\right)^{-1}, \mathbf{A}_i' = \left(\mathbf{E}_i\mathbf{A}^{-1}\mathbf{E}_i^{\dagger}\right)^{-1},$$

the device comprises :

- means for reducing the k-th column of the upper triangular matrix R and updating the unimodular matrix T into a new unimodular matrix, k being a variable indicating the rank of a column within the reduced upper triangular matrix R,
- means for permuting the k-th and the k-1-th columns of the reduced upper triangular matrix R and of the new unimodular matrix T according to a comparison between the elements of the k-1th and k-th row of the k-th column of the reduced upper triangular matrix R,
- means for triangularizing the reduced upper triangular matrix R of which columns are permuted into a new reduced upper triangular matrix and updating the unitary matrix Q into a new unitary matrix.

9. Computer program which can be directly loaded into a programmable device, comprising instructions or portions of code for implementing the steps of the method according to claims 1 to 7, when said computer program is executed on a programmable device.

**Patentansprüche**

1. Verfahren zum Decodieren empfangener Symbole durch einen Empfänger unter Verwendung einer Lenstra-Lenstra-Lovász-Reduktion eines Gitters in einem Empfänger, der Konstellationspunkte durch einen Mehrfacheingangs-Mehrfachausgangs-Kanal von einer den Mehrfacheingangs-Mehrfachausgangs-Kanal darstellenden Matrix empfängt, die in eine unitäre Matrix Q, eine obere Dreiecksmatrix R und eine unimodulare Matrix T zerlegt ist, **dadurch gekennzeichnet, dass** die reduzierte obere Dreiecksmatrix R, die unitäre Matrix Q und die unimodulare Matrix T die folgende Formel erfüllen:

$$M = QRT^{-1},$$

wobei M eine obere Dreiecksmatrix M des Mehrfacheingangs-Mehrfachausgangs-Kanals ist, das Verfahren in einem Algorithmus mit weicher Entscheidung für eine Ausgabe ausgeführt wird und die Größe der oberen Dreiecksmatrix M gleich der Anzahl von Antennen N minus eins einer Quelle ist, die die Konstellationspunkte sendet, Beiträge von angenommenen gesendeten Symbolen von den empfangenen Konstellationspunkten subtrahiert werden, und ein Vorfiltern, das die Subtraktion berücksichtigt, durchgeführt wird, um die obere Dreiecksmatrix bereitzustellen, wobei das Vorfiltern (S401) $\boldsymbol{W}_{\hat{z}_i} \boldsymbol{F}_{\hat{z}_i}$ gemäß der folgenden Formel durchgeführt wird:

$$\mathbf{F}_{\hat{z}_i} = \mathbf{E}_i \left( \mathbf{I} + \frac{\mathbf{A}^{-1}\mathbf{e}_i^\dagger\mathbf{e}_i}{\frac{\rho(\rho+|\hat{z}_i|^2)}{|\hat{z}_i|^2}+\mathbf{e}_i\mathbf{A}^{-1}\mathbf{e}_i^\dagger} \right) \mathbf{A}^{-1}\mathbf{H}^\dagger,$$

wobei $e_i$ ein Zeilenvektor einer Größe N ist, der nur Einträge von Null umfasst, aber bei der i-ten Position eine Eins hat, $\mathbf{A} = \mathbf{H}^\dagger\mathbf{H}+\rho^{-1}\mathbf{I}$, $\hat{z}_i$ die i-te Komponente des gesendeten Vektors von empfangenen Symbolen ist, $\mathbf{H}$ eine Kanalschätzung zwischen der Quelle und dem Empfänger ist, $\rho$ das Signal-zu-Rausch-Verhältnis ist, $\mathbf{I}$ die Identitätsmatrix ist und $\mathbf{E}_i$ eine $N_i \times N_i$ - Identitätsmatrix ist, von welcher die i-te Zeile entfernt ist,

$$\mathbf{W}_{\hat{z}_i}^\dagger\mathbf{W}_{\hat{z}_i} = \mathbf{A}'_i\mathbf{E}_i\mathbf{A}^{-1}\left(\mathbf{A} - \beta\mathbf{e}_i^\dagger\mathbf{e}_i\right)\mathbf{A}^{-1}\mathbf{E}_i^\dagger\mathbf{A}'_i$$

wobei

$$\beta = \left(\frac{\rho(\rho+|\hat{z}_i|^2)}{|\hat{z}_i|^2} + \mathbf{e}_i\mathbf{A}^{-1}\mathbf{e}_i^\dagger + \mathbf{e}_i\mathbf{A}^{-1}\mathbf{E}_i^\dagger\mathbf{A}'_i\mathbf{E}_i\mathbf{A}^{-1}\mathbf{e}_i^\dagger\right)^{-1},$$

$$\mathbf{A'}_i = \left(E_i \mathbf{A}^{-1} \mathbf{E}_i^{\dagger}\right)^{-1}$$

wobei das Verfahren die folgenden Schritte umfasst:

- Reduzieren (S503) der k-ten Spalte der oberen Dreiecksmatrix R und Aktualisieren der unimodularen Matrix T in eine neue unimodulare Matrix, wobei k eine Variable ist, die den Rang einer Spalte innerhalb der reduzierten oberen Dreiecksmatrix R anzeigt,
- Permutieren (S506) der k-ten und der k-1-ten Spalten der reduzierten oberen Dreiecksmatrix R und der neuen unimodularen Matrix T gemäß einem Vergleich zwischen den Elementen der k-1-ten und k-ten Zeile der k-ten Spalte der reduzierten oberen Dreiecksmatrix R,
- Triangularisieren (S507) der reduzierten oberen Dreiecksmatrix R, von welcher Spalten in eine neue reduzierte obere Dreiecksmatrix R permutiert sind, und Aktualisieren der unitären Matrix Q in eine neue unitäre Matrix.

2.  Verfahren nach Anspruch 1, **dadurch gekennzeichnet, dass** das Verfahren folgenden weiteren Schritt umfasst:

Aktualisieren der Variable, die den Rang der Spalte anzeigt,
und das Reduzieren, das Permutieren, das Triangularisieren iterativ an der neuen oberen Dreiecksmatrix R, der neuen unimodularen Matrix und der neuen unitären Matrix ausgeführt werden.

3.  Verfahren nach Anspruch 2, **dadurch gekennzeichnet, dass** die neue reduzierte Dreiecksmatrix R, die neue unitäre Matrix Q und die neue unimodulare Matrix T die folgende Formel erfüllen

$$M = QRT^{-1},$$

wobei M die obere Dreiecksmatrix M des Mehrfacheingangs-Mehrfachausgangs-Kanals ist.

4.  Verfahren nach einem der Ansprüche 1 bis 3, **dadurch gekennzeichnet, dass** das Verfahren folgenden weiteren Schritt umfasst:

- Berechnen eine Koeffizienten $\alpha = \lfloor \mathbf{R}_{k-1,k}/\mathbf{R}_{k-1,k-1} \rceil$, wobei $\lfloor . \rceil$ eine Rundungsoperation ist, die die nächste ganze Zahl an dem Real- und Imaginärteil unabhängig nimmt, $\mathbf{R}_{k-1,k}$ das k-1-te Element der k-ten Spalte von R ist und $\mathbf{R}_{k-1,k-1}$ das k-1-te Element der k-1-ten Spalte von R ist, das Reduzieren der oberen Dreiecksmatrix unter Verwendung der folgenden Formel durchgeführt wird $\forall 1 \le i \le k-1$, $\mathbf{R}_{i,k} \leftarrow \mathbf{R}_{i,k} - \alpha \mathbf{R}_{i,k-1}$ und die Aktualisierung der unimodularen Matrix T gemäß der folgenden Formel durchgeführt wird:

$$\forall 1 \le i \le n, \mathbf{T}_{i,k} \leftarrow \mathbf{T}_{i,k} - \alpha \mathbf{T}_{i,k-1}.$$

5.  Verfahren nach Anspruch 4, **dadurch gekennzeichnet, dass** die Permutation durchgeführt wird, wenn $\delta|R_{k-1,k}|^2 > |R_{k-1,k}|^2 + |R_{k,k}|^2$, wobei $\delta$ ein Parameter ist, der größer als ½ und kleiner als oder gleich 1 ist.

6.  Verfahren nach Anspruch 5, **dadurch gekennzeichnet, dass** die Variable k, die den Rang der Spalte anzeigt, aktualisiert wird als:
wenn $\delta|R_{k-1,k}|^2 > |R_{k-1,k}|^2 + |R_{k,k}|^2$, dann $k \leftarrow max(k-1,2)$, sonst $k \leftarrow k+1$

7.  Verfahren nach Anspruch 5, **dadurch gekennzeichnet, dass** die Variable k, die den Rang der Spalte anzeigt, aktualisiert wird als:

$$k \leftarrow mod(k-1, n-1) + 2,$$

wobei mod die Modulo-Operation ist.

8. Vorrichtung zum Decodieren empfangener Symbole durch einen Empfänger unter Verwendung einer Lenstra-Lenstra-Lovász-Reduktion eines Gitters in einem Empfänger, der Konstellationspunkte durch einen Mehrfacheingangs-Mehrfachausgangs-Kanal von einer den Mehrfacheingangs-Mehrfachausgangs-Kanal darstellenden Matrix empfängt, die in eine unitäre Matrix Q, eine obere Dreiecksmatrix R und eine unimodulare Matrix T zerlegt ist, **dadurch gekennzeichnet, dass** die reduzierte obere Dreiecksmatrix R, die unitäre Matrix Q und die unimodulare Matrix T die folgende Formel erfüllen:

$$M = QRT^{-1},$$

wobei M eine obere Dreiecksmatrix M des Mehrfacheingangs-Mehrfachausgangs-Kanals ist, die Vorrichtung einen Algorithmus mit weicher Entscheidung für eine Ausgabe ausführt und die Größe der oberen Dreiecksmatrix M gleich der Anzahl von Antennen N minus eins einer Quelle ist, die die Konstellationspunkte sendet, Beiträge von angenommenen gesendeten Symbolen von den empfangenen Konstellationspunkten subtrahiert werden, und ein Vorfiltern, das die Subtraktion berücksichtigt, durchgeführt wird, um die obere Dreiecksmatrix bereitzustellen, wobei das Vorfiltern $\mathbf{W}_{\hat{z}_i}\mathbf{F}_{\hat{z}_i}$ gemäß der folgenden Formel durchgeführt wird:

$$\mathbf{F}_{\hat{z}_i} = \mathbf{E}_i\left(\mathbf{I} + \frac{\mathbf{A}^{-1}\mathbf{e}_i^{\dagger}\mathbf{e}_i}{\frac{\rho(\rho+|\hat{z}_i|^2)}{|\hat{z}_i|^2} + \mathbf{e}_i\mathbf{A}^{-1}\mathbf{e}_i^{\dagger}}\right)\mathbf{A}^{-1}\mathbf{H}^{\dagger},$$

wobei $e_i$ ein Zei lenvektor einer Größe N ist, der nur Einträge von Null umfasst, aber bei der i-ten Position eine Eins hat, $\mathbf{A} = \mathbf{H}^{\dagger}\mathbf{H} + \rho^{-1}\mathbf{I}$, $\hat{z}_i$ die i-te Komponente des gesendeten Vektors von empfangenen Symbolen ist, $\mathbf{H}$ eine Kanalschätzung zwischen der Quelle und dem Empfänger ist, $\rho$ das Signal-zu-Rausch-Verhältnis ist, $\mathbf{I}$ die Identitätsmatrix ist und $\mathbf{E}_i$ eine $N_i \times N_i$ - Identitätsmatrix ist, von welcher die i-te Zeile entfernt ist,

$$\mathbf{W}_{\hat{z}_i}^{\dagger}\mathbf{W}_{\hat{z}_i} = \mathbf{A}'_i\mathbf{E}_i\mathbf{A}^{-1}(\mathbf{A} - \beta\mathbf{e}_i^{\dagger}\mathbf{e}_i)\mathbf{A}^{-1}\mathbf{E}_i^{\dagger}\mathbf{A}'_i$$

wobei

$$\beta = \left(\frac{\rho(\rho+|\hat{z}_i|^2)}{|\hat{z}_i|^2} + \mathbf{e}_i\mathbf{A}^{-1}\mathbf{e}_i^{\dagger} + \mathbf{e}_i\mathbf{A}^{-1}\mathbf{E}_i^{\dagger}\mathbf{A}'_i\mathbf{E}_i\mathbf{A}^{-1}\mathbf{e}_i^{\dagger}\right)^{-1},$$

$$\mathbf{A}'_i = \left(E_i\mathbf{A}^{-1}\mathbf{E}_i^{\dagger}\right)^{-1}$$

wobei die Vorrichtung folgendes umfasst:

- Mittel zum Reduzieren der k-ten Spalte der oberen Dreiecksmatrix R und Aktualisieren der unimodularen Matrix T in eine neue unimodulare Matrix, wobei k eine Variable ist, die den Rang einer Spalte innerhalb der reduzierten oberen Dreiecksmatrix R anzeigt,
- Mittel zum Permutieren der k-ten und der k-1-ten Spalten der reduzierten oberen Dreiecksmatrix R und der neuen unimodularen Matrix T gemäß einem Vergleich zwischen den Elementen der k-1-ten und k-ten Zeile der k-ten Spalte der reduzierten oberen Dreiecksmatrix R,
- Mittel zum Triangularisieren der reduzierten oberen Dreiecksmatrix R, von welcher Spalten in eine neue reduzierte obere Dreiecksmatrix R permutiert sind, und Aktualisieren der unitären Matrix Q in eine neue unitäre Matrix.

9. Computerprogramm, das direkt in eine programmierbare Vorrichtung geladen werden kann, umfassend Anweisungen oder Teilbereiche eines Codes zum Implementieren der Schritte des Verfahrens nach den Ansprüchen 1 bis 7, wenn das Computerprogramm auf einer programmierbaren Vorrichtung ausgeführt wird.

**Revendications**

1. Procédé de décodage de symboles reçus par un récepteur utilisant une réduction de lattice Lenstra-Lenstra-Lovász dans un récepteur recevant des points de constellation à travers un canal Multi Entrées Multi Sorties, à partir d'une matrice représentant le canal Multi Entrées Multi Sorties décomposée en une matrice unitaire. Q, une matrice triangulaire supérieure R, et une matrice uni modulaire T, **caractérisé en ce que** la matrice triangulaire supérieure réduite R, la matrice unitaire Q et la matrice uni modulaire T satisfont à la formule suivante:

$$M = QRT^{-1}, \text{ où } M \text{ est une matrice triangulaire supérieure du canal Multi Entrées}$$

où M est une matrice triangulaire supérieure du canal Multi Entrées Multi Sorties, la méthode est exécutée dans un algorithme de décision de sortie souple et la taille de la matrice triangulaire supérieure M est égale au nombre d'antennes $N_t$ moins un d'une source qui transmet les points de constellation, des contributions de symboles présumés transmis sont soustraites des points de constellation reçus et un pré filtrage qui prend en compte la soustraction est effectué afin de fournir la matrice triangulaire supérieure M, le pré filtrage (S401) $\mathbf{W}_{\hat{z}_i}\mathbf{F}_{\hat{z}_i}$ étant exécuté selon la formule suivante:

$$\mathbf{F}_{\hat{z}_i} = \mathbf{E}_i \left( \mathbf{I} + \frac{\mathbf{A}^{-1}\mathbf{e}_i^\dagger \mathbf{e}_i}{\frac{\rho(\rho + |\hat{z}_i|^2)}{|\hat{z}_i|^2} + \mathbf{e}_i \mathbf{A}^{-1}\mathbf{e}_i^\dagger} \right) \mathbf{A}^{-1}\mathbf{H}^\dagger ,$$

où $\mathbf{e}_i$ est un vecteur ligne de taille $N_t$ comprenant toutes les entrées à zéros mais ayant dans la -ième position un un, $\mathbf{A} = \mathbf{H}^\dagger\mathbf{H} + \rho^{-1}\mathbf{I}$, $\hat{z}_i$ est la i-ième composante du vecteur transmis de symboles reçus, $\mathbf{H}$ est une estimation de canal entre la source et le récepteur, $\rho$ est le signal à rapport de bruit, $\mathbf{I}$ est la matrice d'identité et $\mathbf{E}_i$ est une $N_t \times N_t$ matrice identité à partir de laquelle la -ième rangée est enlevée,

$$\mathbf{W}_{\hat{z}_i}^\dagger \mathbf{W}_{\hat{z}_i} = \mathbf{A}_i' \mathbf{E}_i \mathbf{A}^{-1} \left( \mathbf{A} - \beta \mathbf{e}_i^\dagger \mathbf{e}_i \right) \mathbf{A}^{-1}\mathbf{E}_i^\dagger \mathbf{A}_i'$$

où

$$\beta = \left( \frac{\rho(\rho + |\hat{z}_i|^2)}{|\hat{z}_i|^2} + \mathbf{e}_i \mathbf{A}^{-1}\mathbf{e}_i^\dagger + \mathbf{e}_i \mathbf{A}^{-1}\mathbf{E}_i^\dagger \mathbf{A}_i' \mathbf{E}_i \mathbf{A}^{-1}\mathbf{e}_i^\dagger \right)^{-1} ., \quad \mathbf{A}_i' = \left( \mathbf{E}_i \mathbf{A}^{-1}\mathbf{E}_i^\dagger \right)^{-1} .$$

le procédé comporte les étapes de:

- réduction (S503) de la k-ième colonne de la matrice triangulaire supérieure R et mise à jour de la matrice uni modulaire T dans une nouvelle matrice uni modulaire, k étant une variable indiquant le rang d'une colonne dans la matrice triangulaire supérieure réduite R,
- permutation (S506) de la k-ième et de la k-1-ième colonnes de la matrice triangulaire supérieure réduite R et de la nouvelle matrice unimodulaire T selon une comparaison entre les éléments de la k-1 ième et de la k-ième ligne de la k-ième colonne de la matrice triangulaire supérieure réduite R,
- triangularisation (S507) de la matrice triangulaire supérieure réduite R dont les colonnes sont permutées en une nouvelle matrice triangulaire supérieure réduite et mise à jour de la matrice unitaire Q en une nouvelle matrice unitaire.

2. Procédé selon la revendication 1, **caractérisé en ce que** le procédé comporte en outre l'étape de:

mise à jour de la variable indiquant le rang de la colonne, et
la réduction, la permutation, la triangularisation sont exécutées itérativement sur la nouvelle matrice triangulaire supérieure R, la nouvelle matrice uni modulaire et la nouvelle matrice unitaire.

**3.** Procédé selon la revendication 2, **caractérisé en ce que** la nouvelle matrice triangulaire supérieure réduite R, la nouvelle matrice unitaire Q et la nouvelle matrice unimodulaire T répondent à la formule suivante,

$$M = QRT^{-1}, \text{ où M est la matrice triangulaire supérieure M du canal Multi Entrées}$$

où M est la matrice triangulaire supérieure M du canal Multi Entrées Multi Sorties.

**4.** Procédé selon l'une quelconque des revendications 1 à 3, **caractérisé en ce que** le procédé comporte en outre une étape de

- calcul d'un coefficient $\alpha = \llcorner R_{k-1,k} / R_{k-1,k-1} \lrcorner$, où $\llcorner . \lrcorner$ est une opération d'arrondi prenant indépendamment l'entier le plus proche de la partie réelle et imaginaire, $R_{k-1,k}$ le k-1-ième l'élément de la colonne k de R et $R_{k-1,k-1}$ est le k-1-ième élément de la colonne de R , la réduction de la matrice triangulaire supérieure est effectuée en utilisant la formule suivante et la mise à jour de la matrice unimodulaire T est effectuée selon la formule suivante:

$$\forall 1 \le i \le k-1, \mathbf{R}_{i,k} \leftarrow \mathbf{R}_{i,k} - \alpha \mathbf{R}_{i,k-1}$$

et la mise à jour de la matrice uni modulaire T est effectuée selon la formule suivante:

$$\forall 1 \le i \le n, \mathbf{T}_{i,k} \leftarrow \mathbf{T}_{i,k} - \alpha \mathbf{T}_{i,k-1} .$$

**5.** Procédé selon la revendication 4, **caractérisé en ce que** la permutation est réalisée si $\delta |R_{k-1,k}|^2 > |R_{k-1,k}|^2 + |R_{k,k}|^2$ où est $\delta$ un paramètre supérieur à ½ et inférieur ou égal à 1.

**6.** Procédé selon la revendication 5, **caractérisé en ce que** la variable k indiquant le rang de la colonne est mise à jour comme: si $\delta |R_{k-1,k}|^2 > |R_{k-1,k}|^2 + |R_{k,k}|^2$ alors $k \leftarrow \max(k-1,2)$ , sinon $k \leftarrow k+1$.

**7.** Procédé selon la revendication 5, **caractérisé en ce que** la variable k indiquant le rang de la colonne est mise à jour comme: $k \leftarrow \mod(k-1, n-1) + 2$ où mod est l'opération modulo.

**8.** Dispositif de décodage de symboles reçus par un récepteur utilisant une réduction de lattice Lenstra-Lenstra-Lovász dans un récepteur recevant des points de constellation à travers un canal Multi Entrées Multi Sorties, à partir d'une matrice représentant le canal Multi Entrées Multi Sorties décomposée en une matrice unitaire. Q, une matrice triangulaire supérieure R, et une matrice uni modulaire T, **caractérisé en ce que** la matrice triangulaire supérieure réduite R, la matrice unitaire Q et la matrice uni modulaire T satisfont à la formule suivante:

$$M = QRT^{-1},$$

où M est une matrice triangulaire supérieure du canal Multi Entrées Multi Sorties, la méthode est exécutée dans un algorithme de décision de sortie souple et la taille de la matrice triangulaire supérieure M est égale au nombre d'antennes $N_t$ moins un d'une source qui transmet les points de constellation, des contributions de symboles présumés transmis sont soustraites des points de constellation reçus et un pré filtrage qui prend en compte la soustraction est effectué afin de fournir la matrice triangulaire supérieure M, le pré filtrage (S401) $\mathbf{W}_{\hat{z}_i} \mathbf{F}_{\hat{z}_i}$, étant exécuté selon la formule suivante:

$$F_{\hat{z}_i} = E_i \left( I + \frac{A^{-1} e_i^\dagger e_i}{\frac{\rho(\rho + |\hat{z}_i|^2)}{|\hat{z}_i|^2} + e_i A^{-1} e_i^\dagger} \right) A^{-1} H^\dagger,$$

où $e_i$ est un vecteur ligne de taille $N_t$ comprenant toutes les entrées à zéro mais ayant dans la -ième position un un, $A = H^\dagger H + \rho^{-1} I$, $\hat{z}_i$ est la i-ième composante du vecteur transmis de symboles reçus, $H$ est une estimation de canal entre la source et le récepteur, $\rho$ est le signal à rapport de bruit, $I$ est la matrice d'identité et $E_i$ est une $N_t \times N_t$ matrice identité à partir de laquelle la -ième rangée est enlevée,

$$W_{\hat{z}_i}^\dagger W_{\hat{z}_i} = A'_i E_i A^{-1} \left( A - \beta e_i^\dagger e_i \right) A^{-1} E_i^\dagger A'_i$$

où

$$\beta = \left( \frac{\rho(\rho + |\hat{z}_i|^2)}{|\hat{z}_i|^2} + e_i A^{-1} e_i^\dagger + e_i A^{-1} E_i^\dagger A'_i E_i A^{-1} e_i^\dagger \right)^{-1}., \quad A'_i = \left( E_i A^{-1} E_i^\dagger \right)^{-1}.$$

le dispositif comporte :

- des moyens de réduction de la k-ième colonne de la matrice triangulaire supérieure R et mise à jour de la matrice uni modulaire T dans une nouvelle matrice uni modulaire, k étant une variable indiquant le rang d'une colonne dans la matrice triangulaire supérieure réduite R,
- des moyens de permutation de la k-ième et de la k-1-ième colonnes de la matrice triangulaire supérieure réduite R et de la nouvelle matrice unimodulaire T selon une comparaison entre les éléments de la k-1 ième et de la k-ième ligne de la k-ième colonne de la matrice triangulaire supérieure réduite R,
- des moyens de triangularisation de la matrice triangulaire supérieure réduite R dont les colonnes sont permutées en une nouvelle matrice triangulaire supérieure réduite et mise à jour de la matrice unitaire Q en une nouvelle matrice unitaire.

9. Programme d'ordinateur pouvant être directement chargeable dans un dispositif programmable, comprenant des instructions ou des portions de code pour la mise en oeuvre des étapes du procédé selon les revendications 1 à 7, lorsque ledit programme d'ordinateur est exécuté sur un dispositif programmable.

Src

Source

Rec

# Fig. 1

Rec

200 — Processor

203 — RAM

202 — ROM

201

Wireless I/F

205

Ant

# Fig. 2

Fig. 3

Fig. 4

S500 — Get matrix M upper triangular

S501 — R=M T=I Q=I k=2

S502 — Continue ?

S503 — Size reduction of k-th column of R Against the k-1-th

S504 — Update k-th Column of T

S505 — Permutation condition ?

S506 — Permute columns k and k-1 of R and T

S507 — Triangularization Of R and update Q

S508 — Update k

Fig. 5

$600_1$   $610_1$

$620$   $621$   $622$   $623$

| Prefiltering computation | | Joint QR and Effective LLL | SIC | Base transform |

$626$   $624$   $625$

| Substract | Prefiltering | Rotation |

$610_\omega$

$600_{Nr}$

# Fig. 6

S700 — Obtain channel matrix and received vector

S701 — Compute $\mathbf{A}^{-1}$

S702 — i=1

S703 — $i \leq N_t$ ?

S704 — Compute $\mathbf{A'}_i$

S705 — First $\hat{z}_i \in \Omega_i$

S706 — Compute $\mathbf{F}_{\hat{z}_i}$

S707 — Cholesky decomposition

S712 — Next $\hat{z}_i \in \Omega_i$

S708 — Reduce and triangularize

S709 — Decode vector

S710 — Convert x' and store

S711 — Last $\hat{z}_i \in \Omega_i$

S713 — Compute soft output

S714 — Next i

Fig. 7

**REFERENCES CITED IN THE DESCRIPTION**

**Non-patent literature cited in the description**

- A low complexity fast lattice reduction algorithm for MIMO detection. *personal indoor and mobile radio communications, 2012 IEEE 23RD international symposium ON IEEE,* 09 September 2012
- SPC07-3: An Iterative QR-SIC Receiver for Concatenated Space Frequency Coding Schemes in Severe Multipath Channels. **LAI, T.X. ; MURUGANATHAN, S.D. ; SESAY, A.B.** Global Telecommunications Conference, 2006. GLOBECOM '06. IEEE, 27 November 2006, 1, , 5

- **MOHAMED OUSSAMA DAMEN ; HESHAM EL GAMAL ; GIUSEPPE CAIRE.** MMSE-GDFE Lattice Decoding for Under-determined Linear Channels. *International Symposium on Information Theory,* 2004